# FASCICULE DE BREVET EUROPEEN

(11) **EP 3 688 086 B1**
(45) Date de publication et mention de la délivrance du brevet: **10.07.2024**
(21) Numéro de dépôt: 18783068.2
(22) Date de dépôt: 24.09.2018
(51) Int. Cl.: C08K 7/14, C08L 77/06, C08G 69/26, C08G 69/36

(54) **UTILISATION D'UNE COMPOSITION DE COPOLYAMIDE COMME MATRICE DE MATERIAU CHARGE AVEC DES FIBRES DE VERRE A SECTION CIRCULAIRE POUR LIMITER LE GAUCHISSEMENT**
VERWENDUNG EINER COPOLYAMIDZUSAMMENSETZUNG ALS MATRIX VON FÜLLMATERIAL MIT GLASFASERN MIT KREISFÖRMIGEM QUERSCHNITT ZUR BEGRENZUNG VON VERZERRUNG
USE OF A COPOLYAMIDE COMPOSITION AS A MATRIX OF FILLER MATERIAL WITH GLASS FIBRES HAVING A CIRCULAR CROSS SECTION FOR LIMITING WARPING

(30) Priorité: 25.09.2017 FR 1758829
(43) Date de publication de la demande: 05.08.2020
(73) Titulaire: Arkema France, 92700 Colombes (FR)
(72) Inventeur: CASSIANO GASPAR, Stefania, 27300 Bernay (FR); BRULE, Benoît, 27170 Beaumont-Le-Roger (FR)
(74) Mandataire: Arkema Patent
(86) Numéro de dépôt international: PCT/FR2018/052327
(87) Numéro de publication internationale: WO 2019/058077

(56) Documents cités:
- JP-A- 2011 068 874
- US-A1- 2009 280 311
- US-A1- 2011 105 697
- US-A1- 2015 175 744

## Description

La présente invention concerne l'utilisation d'un copolyamide semi-cristallin, en particulier semi-arylaliphatique, semi-alicyclique ou semi-aliphatique ramifié, comme matrice d'un matériau chargé avec des fibres de verre à section circulaire, pour limiter le gauchissement tout en gardant le temps de cycle de la composition obtenue adapté à sa mise en oeuvre. Elle concerne également la composition obtenue et son utilisation pour constituer une structure monocouche ou au moins une couche d'une structure multicouche, notamment dans le domaine électrique et/ou de l'électronique (E/E).

De nombreuses applications dans le domaine E/E demandent des matériaux très rigides (coque de téléphone, pièce ordinateur...). La rigidité est d'autant plus importante que la tendance marché va vers une diminution du poids des équipements électroniques et donc vers une réduction des épaisseurs des pièces.

Toutefois, la réalisation de pièces de faible épaisseur amène d'autres problématiques : aptitude à être injectées, en particulier matériaux suffisamment fluides pour remplir complètement le moule et surtout respect de la stabilité des pièces (absence de gauchissement : problématique majeure avec ces matériaux rigides obtenus par addition des fibres de verre). Il convient également que la transformation (par exemple par injection) se fasse dans des temps de transformation, notamment des temps de cycle adaptés à un procédé industriel.

Le gauchissement est induit par des contraintes internes dont leur conséquence (ou relaxation) est la déformation de la pièce. Dans le cas des matériaux fortement chargés, l'orientation des fibres dans le sens de l'écoulement a, pour conséquence, la limitation du retrait dans cette direction. En revanche, dans la direction perpendiculaire à l'axe des fibres, le retrait est piloté par le polymère et est donc plus important. Ce retrait différentiel est la source principale du gauchissement. Le cas des polymères renforcés par de hauts taux de fibre de verre est clairement le cas de figure pour lequel l'aspect gauchissement est critique.

Dans ces applications, les polyamides (PA) rigides (module > 12GPa) trouvent une grande place. Mais dès lors que le taux de fibres est supérieur à 25%, l'utilisation de fibres à section transversale non circulaire ou plate (FF) est la solution retenue pour satisfaire l'ensemble du cahier des charges, et en particulier pour limiter le gauchissement des pièces fines injectées.

Ainsi, la demande EP2789591, au paragraphe [0003], indique que les fibres de verre à section transversale non circulaire permettent d'améliorer les propriétés mécaniques, la stabilité dimensionnelle et le gauchissement de résines renforcées avec lesdites fibres de verre à section non circulaire. Ceci est dû, selon cette demande, pour ce qui concerne l'amélioration des propriétés mécaniques, au fait que les fibres de verre à section non circulaire ont une surface de contact supérieure à celle des fibres à section circulaire. S'agissant de l'amélioration de la stabilité dimensionnelle et le gauchissement, ceci est dû, toujours selon la demande EP2789591, au fait que les fibres de verre à section non circulaire s'orientent moins dans le sens de l'écoulement que les fibres de verre à section circulaire et tendent par conséquent à être plus orientées de manière bidimensionnelle que les fibres de verre à section circulaire dans la pièce injectée.

De même, la demande US 2011/0105655 décrit des compositions présentant une faible distorsion lors du moulage et constituées de 25 à 72% en poids d'un polyamide, de 20 à 65% en poids de fibres de verre à section plate de ratio L/D de 2 à 8, et de 8 à 25% en poids d'un agent ignifugeant (L représentant la grande dimension de la section transverse de la fibre et D la petite dimension de la section transverse de ladite fibre). Le polyamide utilisé est un mélange de 55-90% en poids d'un polyamide aliphatique et de 10 à 45% en poids d'un autre polyamide qui peut être MXD6 par rapport à la somme totale des polyamides.

Egalement, la demande US 2010/279111 décrit des compositions présentant aussi une faible distorsion lors du moulage constituées de 30 à 80% en poids d'un polyamide et de 20 à 70% de fibres de verre longues à section plate de ratio L/D de 2 à 8. Le polyamide utilisé est soit un mélange de 55 à 85% en poids d'un polyamide aliphatique et de 15 à 45% en poids d'un polyamide qui peut être MXD6 par rapport à la somme totale des polyamides, soit un mélange de 55 à 85% en poids d'un polyamide aliphatique et de 15 à 45% en poids d'un copolyamide comprenant un ou plusieurs polyamides, par exemple MXDI ou MXD6 et au moins un autre polyamide choisi parmi PA 66, 610, 6 et 12, par rapport à la somme totale des polyamides.

Le brevet JP5523520 décrit quant à lui des granulés de polyamide ayant des propriétés électriques et de résistance à la déformation.

La demande US2009/280311 concerne des compositions de polyamide présentant un faible gauchissement.

Les granulés sont constitués de 5-40 parts en poids d'un agent ignifugeant, de 5-200 parts en poids d'une fibre de verre à section plate avec un ratio L/D d'au moins 2,3 et de 0-40 parts en poids d'un polyamide qui peut être un mélange de polyamide aliphatique avec un polyamide semi-aromatique tel que MXD10.

Néanmoins, l'utilisation de fibres de verre à section plate par rapport aux fibres de verre à section circulaire engendre un surcoût non négligeable. De plus les fournisseurs de fibres de verre à section plate sont beaucoup moins nombreux que les fournisseurs de fibre de verre à section circulaire. Ces deux aspects sont essentiels dans le cadre de la production industrielle de résines renforcées en fibres de verre.

Le document EP 1972659 décrit des compositions et articles pour appareils électroniques portables. Les exemples présentés montrent que des compositions à base de mélanges de polyamides PA66 et MXD6, majoritaires en MXD6 (l'exemple 1), sont dépourvues de gauchissement lorsque des fibres de verre à section plate sont utilisées. Par contre, lorsque des fibres de verre à section circulaire sont utilisées (exemple comparatif 2), les compositions présentent un gauchissement important.

Ce document ne traite pas du temps de cycle.

Par ailleurs, le document EP 2456822 enseigne que les compositions à base de MXD10 bien que présentant un bon module nécessitent cependant une température de moule élevée lors de leur mise en forme par injection-moulage pour assurer une cristallisation maximale du produit et donc conférer des propriétés mécaniques et de stabilité dimensionnelle optimales.

Il est donc nécessaire de pouvoir disposer de compositions utilisant des fibres de verres à section circulaire, et une matrice copolyamide permettant ainsi de limiter le coût de ladite composition et de s'assurer d'un approvisionnement pérenne en fibres de verre à section circulaire tout en limitant l'inconvénient de celles-ci, à savoir notamment le gauchissement induit par les fibres de verre lors de la mise en oeuvre de compositions contenant plus de 25% de fibres de verre, et en conservant des cinétiques de cristallisation suffisamment rapides de la matrice pour avoir des temps de transformation, notamment des temps de cycle lors de l'injection suffisamment courts et un démoulage facile.

Ces différents problèmes ont été résolus par des copolyamides spécifiques semi-cristallin, en particulier semi-arylaliphatique, semi-alicyclique ou semi-aliphatique ramifié, comme matrice d'un matériau chargé avec des fibres de verre à section circulaire.

La présente invention concerne donc l'utilisation d'une composition comprenant au moins un copolyamide A/X₁Y semi-cristallin dans lequel :
- A est un motif répétitif obtenu à partir de la polycondensation d'au moins un lactame en C₆ à C₁₂, de préférence en C₁₂, ou d'au moins un aminoacide en C₆ à C₁₂, de préférence en C₁₁, ou d'au moins un motif répétitif XY obtenu à partir de la polycondensation d'au moins une diamine aliphatique (X) en C₄ à C₁₈, en particulier en C₄ à C₁₂ et d'au moins un acide dicarboxylique aliphatique (Y) en C₆ à C₁₈, en particulier en C₆ à C₁₂,
- X₁Y est un motif répétitif obtenu à partir de la polycondensation d'une diamine (X₁) choisie parmi une arylamine, une diamine cycloaliphatique et une diamine aliphatique ramifiée, et d'au moins un acide dicarboxylique aliphatique (Y) identique à celui du motif XY,
   le ratio en poids A/X₁Y étant compris de 60/40 à 95/5,

des fibres de verre à section circulaire, et
optionnellement au moins un modifiant choc et/ou au moins un additif,
pour limiter le gauchissement tout en gardant le temps de cycle de la composition obtenue adapté à sa mise en oeuvre, en particulier par injection.

L'acide dicarboxylique aliphatique (Y) est donc tel que défini ci-dessus en C₆ à C₁₈, en particulier en C₆ à C₁₂ dans le cas ou A est obtenu à partir de la polycondensation d'au moins un lactame ou au moins un aminoacide. Lorsque A est un motif XY, Y dans le motif X₁Y est tel que défini ci-dessus et de plus identique à celui du motif XY.

En d'autres termes, la présente invention concerne l'utilisation d'une composition comprenant au moins un copolyamide A/X₁Y semi-cristallin dans lequel :
- A est un motif répétitif obtenu à partir de la polycondensation d'au moins un lactame en C₆ à C₁₂, de préférence en C₁₂, ou d'au moins un aminoacide en C₆ à C₁₂, de préférence en C₁₁, ou d'au moins un motif répétitif XY obtenu à partir de la polycondensation d'au moins une diamine aliphatique (X) en C₄ à C₁₈, en particulier en C₄ à C₁₂ et d'au moins un acide dicarboxylique aliphatique (Y) en C₆ à C₁₈, en particulier en C₆ à C₁₂,
- X₁Y est un motif répétitif obtenu à partir de la polycondensation d'une diamine (X₁) choisie parmi une arylamine, une diamine cycloaliphatique et une diamine aliphatique ramifiée, et d'au moins un acide dicarboxylique aliphatique (Y) tel que défini ci-dessus et identique à celui du motif XY lorsque A est un motif XY,
   le ratio en poids A/X₁Y étant compris de 60/40 à 95/5,

des fibres de verre à section circulaire, et
optionnellement au moins un modifiant choc et/ou au moins un additif,
pour limiter le gauchissement d'un article issu de ladite composition tout en gardant le temps de cycle de la composition obtenue adapté à sa mise en oeuvre pour la préparation dudit article, en particulier par injection.

Avantageusement, l'acide cyclohexane dicarboxylique est exclu de la définition de l'acide dicarboxylique aliphatique (Y).

Dans toute la description, l'expression compris de ... à ...signifie que les bornes sont incluses.

Les inventeurs ont trouvé de manière inattendue que la présence d'un motif répétitif X₁Y à base d'une diamine arylaliphatique, cycloaliphatique ou aliphatique ramifié, en proportion massique particulière dans une composition comprenant un copolyamide semi-cristallin A/X₁Y et des fibres de verre à section circulaire permettait non seulement de limiter le gauchissement d'un article issu de ladite composition de la composition par rapport au polyamide aliphatique linéaire A seul lors de la mise en oeuvre, en particulier par injection de la composition, mais également de conserver un temps de cycle adapté lors de la mise en oeuvre, tout en évitant les problèmes d'éjection de moule associés à la cristallisation incomplète de la composition.

Un copolyamide semi-cristallin, au sens de l'invention, désigne un copolyamide qui présente une température de fusion (Tf) en DSC selon la norme ISO 11357-3 :2013, et une enthalpie de cristallisation lors de l'étape de refroidissement à une vitesse de 20K/min en DSC mesurée selon la norme ISO 11357-3 de 2013 supérieure à 30 J/g, de préférence supérieure à 40 J/g.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Lorsque le motif répétitif A dudit copolyamide est obtenu à partir de la polycondensation d'un lactame ledit lactame peut être choisi parmi la pyrrolidinone, la 2-pipéridinone, le caprolactame, l'énantholactame, le caprylolactame, le pelargolactame, le décanolactame, l'undécanolactame, et le lauryllactame, en particulier le lauryllactame.

Lorsque le motif répétitif A dudit copolyamide est obtenu à partir de la polycondensation d'un aminoacide, il peut être choisi parmi l'acide 9-aminononanoïque, l'acide 10-aminodécanoïque, l'acide 10-aminoundécanoïque, l'acide 12-aminododécanoïque et l'acide 11-aminoundécanoïque ainsi que ses dérivés, notamment l'acide N-heptyl-11-aminoundécanoïque, en particulier l'acide 11-aminoundécanoïque.

Lorsque le motif répétitif A dudit copolyamide est obtenu à partir de la polycondensation d'un motif répétitif XY, la diamine (X) en C₄ à C₁₈ utilisée dans le polyamide XY est une diamine aliphatique linéaire, et peut être en particulier choisi parmi la 1,4-butanediamine, 1,5-pentaméthylènediamine, la 1,6-hexaméthylènediamine la 1,7-heptaméthylèdiamine, la 1,8-octaméthylèdiamine, la 1,9-nonaméthylèdiamine, la 1,10-décaméthylèdiamine, 1,11-undécaméthylèdiamine, la 1,12-dodécaméthylèdiamine, la 1,13-tridécaméthylèdiamine, la 1,14-tétradécaméthylèdiamine, la 1,16-hexadécaméthylèdiamine et la 1,18-octadécaméthylèdiamine.

Avantageusement, la diamine (X) utilisée est en C₄ à C₁₂, en particulier choisi parmi la 1,4-butanediamine, 1,5-pentaméthylèdiamine, la 1,6-hexaméthylènediamine la 1,7-heptaméthylèdiamine, la 1,8-octaméthylèdiamine, la 1,9-nonaméthylèdiamine, la 1,10-décaméthylèdiamine, 1,11-undécaméthylèdiamine, la 1,12-dodécaméthylèdiamine. Avantageusement, la diamine (X) utilisée est en C₆ à C₁₀, en particulier choisi parmi la 1,6-hexaméthylènediamine la 1,7-heptaméthylèdiamine, la 1,8-octaméthylèdiamine, la 1,9-nonaméthylèdiamine, la 1,10-décaméthylèdiamine.

Lorsque le motif répétitif A dudit copolyamide est obtenu à partir de la polycondensation d'un motif répétitif XY, l'acide dicarboxylique aliphatique (Y) en C₆ à C₁₈ peut être choisi parmi l'acide adipique, l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque.

Avantageusement, l'acide dicarboxylique aliphatique (Y) est en C₆ à C₁₂ et peut être choisi parmi l'acide adipique, l'acide subérique, l'acide azélaïque, l'acide sébacique, l'acide undécanedioïque, l'acide dodécanedioïque.

La diamine aliphatique (X) peut être en mélange avec une ou plusieurs autres diamines aliphatiques X'.

De la même manière l'acide dicarboxylique aliphatique (Y) peut être en mélange avec un ou plusieurs autres acides dicarboxyliques aliphatiques Y'.

Il est bien évident dans ces deux derniers cas que le motif répétitif XY contenant X' et/ou Y' est de toute manière en proportion massique supérieure ou égale à 60%.

Par contre, un mélange de motif répétitif aliphatique XY avec un ou plusieurs motifs répétitifs issus de la polycondensation de lactames ou d'aminoacide est exclu du champ de l'invention.

S'agissant du motif répétitif X₁Y, la diamine (X₁) est choisie parmi une arylamine, une diamine cycloaliphatique, et une diamine aliphatique ramifiée.

Lorsque la diamine (X₁) est une arylamine, elle peut être choisie parmi la méta-xylylène diamine (MXD, N° CAS : 1477-55-0) ou la para-xylylène diamine (PXD, N° CAS : 539-48-0).

Lorsque la diamine (X₁) est une diamine cycloaliphatique, elle peut être choisie parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclohexyl)-méthane ou 3,3'-diméthyl-4,4'-diamino-dicyclohexyl-méthane couramment dénommé (BMACM) ou (MACM) (et noté B ci-après), le bis-(p-aminocyclohexyl)-méthane couramment dénommé (PACM) (et noté P ci-après), en particulier la Dicykan^{®}, l'isopropylidènedi(cyclohexylamine) couramment dénommé (PACP), l'isophorone-diamine (notée IPD ci-après) et le 2,6-bis(amino méthyl)norbornane couramment dénommé (BAMN) et la bis(aminométhyl)cyclohexane « BAC).

Lorsque cette diamine (X₁) est une diamine aliphatique ramifiée, elle est issue d'une diamine aliphatique présentant une chaine principale linéaire comprenant au moins 4 atomes de carbone et comportant un ou plusieurs substituant méthyle et/ou éthyle. Elle peut notamment être la méthyl-2 pentaméthylènediamine (MPMD), la 2-méthyl-1,8-octaméthylènediamine (MOMD) ou la triméthylène (2,2,4 ou 2,4,4) hexaméthylènediamine (TMDA).

L'acide dicarboxylique (Y) du motif répétitif X₁Y est identique à celui du motif répétitif XY et donc tel que défini ci-dessus.

Cependant, lorsque l'acide dicarboxylique du motif répétitif XY est en mélange avec un autre acide dicarboxylique Y' tel que décrit ci-dessus, alors le motif répétitif XY' est en proportion massique minoritaire par rapport à la somme de XY et XY'. Avantageusement, le ratio massique XY/XY' est compris de 90/10 à 99,9/0,1.

De la même manière, lorsque l'acide dicarboxylique du motif répétitif X₁Y est en mélange avec un autre acide dicarboxylique Y' tel que décrit ci-dessus, alors le motif répétitif X₁Y' est en proportion massique minoritaire par rapport à la somme de X₁Y et X₁Y'. Avantageusement, le ratio massique X₁Y/X₁Y' est compris de 90/10 à 99,9/0,1.

Le ratio en poids A/X₁Y est compris de 60/40 à 95/5.

Au-delà de 40% en poids de X₁Y, la composition présente des difficultés de mise en oeuvre et notamment des difficultés d'éjection du moule, un temps de cycle long en raison de la cristallisation trop lente car trop affectée par le taux de monomères et notamment incomplète.

En deçà de 5% en poids de X₁Y, la composition présente du gauchissement. Avantageusement, le ratio en poids A/X₁Y est compris de 70/30 à 95/5.

Par fibre de verre au sens de l'invention, on entend toute fibre de verre, notamment telle que décrite par Frederick T. Wallenberger, James C. Watson and Hong Li, PPG industries Inc. (ASM Handbook, Vol 21 : composites (#06781G), 2001 ASM International), à condition que ladite fibre soit à section circulaire.

Avantageusement, lesdites fibres de verre présentent un ratio L/D (L représentant la grande dimension de la section transverse de la fibre et D la petite dimension de la section transverse de ladite fibre) inférieur à 2, en particulier inférieur à 1,5. Avantageusement, le ratio L/D est égal à environ 1 et le diamètre est compris de 4 µm à moins de 25 µm, de préférence de 4 à 15 µm.

Par l'expression « modifiant choc », il faut entendre un polymère à base polyoléfine présentant un module de flexion inférieur à 100 MPa mesuré à 23°C selon la norme ISO 178 :2010 et de Tg inférieure à 0°C (mesurée selon la norme 11357-2 au niveau du point d'inflexion du thermogramme DSC), en particulier une polyoléfine, couplée ou non avec un Peba (polyether block amide) ayant un module de flexion < 200 MPa. On ne sortirait pas du cadre de l'invention en utilisant un Peba seul comme modifiant choc dans la composition.

La polyoléfine du modifiant choc peut être fonctionnalisée ou non fonctionnalisée ou être un mélange d'au moins une fonctionnalisée et/ou d'au moins une non fonctionnalisée. Notamment, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère éthylène-octène, un terpolymère éthylène-acrylate d'alkyle-anhydride maléique.

Avantageusement, le modifiant choc est choisi parmi le Fusabond^{®} F493, un Pebax^{®}, en particulier le Pebax^{®} 40R53 SP01, un Lotader^{®}, en particulier le Lotader^{®} 5500 ou le Lotader^{®} 7500, le Exxelor^{®} VA1803, ou un mélange de ceux-ci, dans ce cas ils sont dans un rapport allant de 0,1/99,9 à 99,9/0,1, préférentiellement 1/2 à 2/1 lorsqu'ils sont en mélange de deux.

A titre d'exemple, le modifiant choc est choisi parmi les mélanges suivants : Fusabond^{®} 493/Lotader^{®}, en particulier Fusabond^{®} 493/Lotader^{®} 5500 ou Fusabond^{®} 493/Lotader^{®} 7500.

Le modifiant choc peut également être un modifiant de type « core-shell », également désigné « copolymère de type coeur-écorce ».

Le modifiant de type « core-shell » se présente sous la forme de fines particules ayant un coeur en élastomère et au moins une écorce thermoplastique, la taille des particules est en général inférieure au µm et avantageusement comprise de 150 à 500 nm.

Le modifiant de type « core-shell » possède une base acrylique ou butadiène contrairement au modifiant choc qui possède une base polyoléfine. Avantageusement, la proportion de modifiant choc est comprise de 0 à 10% en poids par rapport au poids total de la composition.

Les additifs optionnellement utilisés dans la composition de l'invention sont les additifs classiques utilisés dans les polyamides et bien connus de l'homme du métier tels que les charges, les colorants, les stabilisants, les plastifiants, les agents tensioactifs, les agents nucléants, les pigments, les azurants, les antioxydants, les lubrifiants, les ignifugeants, les cires et leurs mélanges.

Dans toute la description, le terme « charge » exclut les fibres de verre sous quelque forme que ce soit.

L'expression « limiter le gauchissement » signifie que le gauchissement est inférieur à 1,5 mm, en particulier inférieur à 1 mm tel que déterminé sur des plaques de 100*100*1 mm³, 7 jours après la transformation.

Le gauchissement peut être totalement supprimé mais en règle générale, il est inférieur à 1,5 mm, en particulier inférieur à 1 mm.

L'expression « tout en gardant le temps de cycle de la composition obtenue adapté à sa mise en oeuvre » signifie que le temps nécessaire pour la fabrication d'une pièce à partir de la composition de l'invention n'est pas trop long.

En particulier le temps de cycle par injection comprenant les étapes d'injection, refroidissement, ouverture du moule et éjection du produit formé, s'effectue en moins de 50 secondes, préférentiellement en moins de 40 secondes, notamment en moins de 30 secondes.

On ne sortirait pas du cadre de l'invention si la mise en oeuvre était effectuée par moulage par compression.

Avantageusement, la présente invention concerne l'utilisation d'une composition comprenant au moins un copolyamide A/X₁Y semi-cristallin dans lequel :
- A est un motif répétitif obtenu à partir de la polycondensation d'un lactame en C₆ à C₁₂, de préférence en C₁₂, ou d'un aminoacide en C₆ à C₁₂, de préférence en C₁₁, ou d'un motif répétitif XY obtenu à partir de la polycondensation d'une diamine aliphatique (X) en C₄ à C₁₈, en particulier en C₄ à C₁₂ et d'un acide dicarboxylique aliphatique (Y) en C₆ à C₁₈, en particulier en C₆ à C₁₂,
- X₁Y est un motif répétitif obtenu à partir de la polycondensation d'une diamine (X₁) choisie parmi une arylamine, une diamine cycloaliphatique et une diamine aliphatique ramifiée, et d'un acide dicarboxylique aliphatique (Y) identique à celui du motif XY,

le ratio en poids A/X₁Y étant compris de 60/40 à 95/5,
des fibres de verre à section circulaire, et
optionnellement au moins un modifiant choc et/ou au moins un additif,
pour limiter le gauchissement tout en gardant le temps de cycle de la composition obtenue adapté à sa mise en oeuvre, en particulier par injection.

Les différents motifs répétitifs sont tels que définis ci-dessus à la différence que le motif répétitif A est obtenu à partir de la polycondensation d'un seul lactame, ou d'un seul aminoacide ou d'un seul motif XY et que le motif X₁Y correspond également à un seul motif répétitif.

Par conséquent, le copolyamide de ce mode de réalisation est constitué uniquement de deux motifs répétitifs.

Avantageusement, la présente invention concerne l'utilisation d'une composition telle que ci-dessus définie caractérisée en ce que ladite composition comprend :
- de 25 à 65% en poids, en particulier de 35 à 65% dudit au moins un copolyamide A/X₁Y,
- de 35 à 75% en poids, en particulier de 35 à 65% en poids de fibres de verre à section circulaire,
- de 0 à 10% en poids d'au moins un modifiant choc,
- de 0 à 2% en poids d'au moins un additif,
la somme des proportions de chaque constituant de la composition étant égale à 100%. Dans un mode de réalisation, ladite arylamine du motif X₁Y dudit copolyamide de la dite composition est choisie parmi la meta-xylylène diamine (MXD) et la para-xylylène diamine (PXD).

Dans un autre mode de réalisation, ladite diamine cycloaliphatique du motif X₁Y dudit copolyamide de la dite composition est choisi parmi la bis(aminométhyl)cyclohexane (BAC), le 3,3'-diméthyl-4,4'-diamino-dicyclohexyl-méthane couramment dénommé (BMACM) ou (MACM) et le bis-(p-aminocyclohexyl)-méthane couramment dénommé (PACM).

La BAC peut être la 1,3-BAC ou la 1,4-BAC.

Dans un autre mode de réalisation, ladite diamine cycloaliphatique du motif X₁Y dudit copolyamide de la dite composition est la bis(aminométhyl)cyclohexane (BAC).

La BAC peut être la 1,3-BAC ou la 1,4-BAC.

La 1,3-BAC (ou 1,3 bis(aminométhyl)cyclohexane, N° CAS : 2579-20-6) est un monomère diamine cycloaliphatique obtenu notamment par hydrogénation de la meta-xylylène diamine (MXD). La 1 ,3-BAC existe sous la forme de deux isomères, cis et trans, le N° CAS : 2579-20-6 correspondant à un mélange d'isomères.

La 1,4-BAC (ou 1,4 bis(aminométhyl)cyclohexane, N° CAS : 2549-07-9) est un monomère diamine cycloaliphatique obtenu notamment par hydrogénation de la para-xylylène diamine (PXD). La 1 ,4-BAC existe sous la forme de deux isomères, cis et trans, le N° CAS : 2549-07-9 correspondant à un mélange d'isomères.

Avantageusement, la 1,3-BAC ou la 1,4-BAC utilisée dans la composition de l'invention est un mélange d'isomères cis et trans en proportion respective de 0,1/99,9 à 99,9/0,1, notamment de 75/25 à 25/75.

Il est bien entendu que lorsque la 1 ,3-BAC ou la 1 ,4-BAC utilisée dans la composition de l'invention est un mélange d'isomères cis et trans, cela ne correspond pas à un mélange de diamine X, mais à une seule diamine X₁.

Avantageusement, la proportion d'isomère cis dans la 1,3-BAC est supérieure à 60%, préférentiellement supérieure à 70%, en particulier supérieure à 80%, notamment supérieure à 90%.

Avantageusement, la proportion d'isomère trans dans la 1,4-BAC est supérieure à 60%, préférentiellement supérieure à 70%, en particulier supérieure à 80%, notamment supérieure à 90%.

Dans un autre mode de réalisation, ladite diamine aliphatique ramifiée est choisie parmi la 2-méthyloctanediamine (MOMD), la méthylpentaméthylène diamine (MPMD) et la triméthylhexaméthylènediamine (TMDA).

Dans un mode de réalisation avantageux, ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY.

Avantageusement, A est un motif répétitif XY et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Dans un mode de réalisation, A est un motif répétitif XY et (Y) est un acide dicarboxylique aliphatique (Y) en C₆ à C₁₂, en particulier (Y) correspond à l'acide sébacique. Avantageusement, A est un motif répétitif XY, (Y) étant un acide dicarboxylique aliphatique (Y) en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un motif répétitif XY, (Y) correspondant à l'acide sébacique et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Dans un mode de réalisation, (X) correspond à une diamine en C₆ à C₁₂, en particulier l'hexaméthylène diamine ou la decanediamine.

Avantageusement, A est un motif répétitif XY, (Y) étant un acide dicarboxylique aliphatique (Y) en C₆ à C₁₂ et (X) correspond à une diamine en C₆ à C₁₂. Avantageusement, A est un motif répétitif XY, (Y) étant un acide dicarboxylique aliphatique (Y) en C₆ à C₁₂ et (X) correspond à l'hexaméthylène diamine ou la decanediamine.

Avantageusement, A est un motif répétitif XY, (Y) étant un acide dicarboxylique aliphatique (Y) en C₆ à C₁₂, (X) correspond à une diamine en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY, (Y) étant l'acide sébacique ou l'acide dodécanedioïque, (X) correspond à une diamine en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY, (Y) étant l'acide sébacique, (X) correspond à une diamine en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un motif répétitif XY, (Y) étant l'acide dodécanedioïque, (X) correspond à une diamine en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY, (Y) étant un acide dicarboxylique aliphatique (Y) en C₆ à C₁₂, (X) correspond à l'hexaméthylène diamine ou la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un motif répétitif XY, (Y) étant l'acide sébacique ou l'acide dodécanedioïque, (X) correspond à l'hexaméthylène diamine ou la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un motif répétitif XY, (Y) étant l'acide sébacique, (X) correspond à l'hexaméthylène diamine ou la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY, (Y) étant l'acide sébacique, (X) correspond à l'hexaméthylène diamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un motif répétitif XY, (Y) étant l'acide sébacique, (X) correspond à la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un motif répétitif XY, (Y) étant l'acide dodécanedioïque, (X) correspond à l'hexaméthylène diamine ou la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY, (Y) étant l'acide dodécanedioïque, (X) correspond à l'hexaméthylène diamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un motif répétitif XY, (Y) étant l'acide dodécanedioïque, (X) correspond à la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Dans un mode de réalisation A est un motif répétitif obtenu à partir de la polycondensation d'un lactame ou d'un aminoacide.

Avantageusement, A est lactame en C₆ à C₁₂, en particulier le caprolactame ou le lauryl lactame.

Avantageusement, A est un lactame en C₆ à C₁₂, en particulier le caprolactame ou le lauryl lactame et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est le lauryl lactame et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est le caprolactame et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est un aminoacide en C₆ à C₁₂, en particulier l'acide 11-aminoundécanoïque.

Avantageusement, A est un aminoacide en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, A est l'acide 11-aminoundécanoïque et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Dans un mode de réalisation, ledit au moins un additif est choisi parmi les charges, les colorants, les stabilisants, les plastifiants, les agents tensioactifs, les agents nucléants, les pigments, les azurants, les antioxydants, les lubrifiants, les ignifugeants, les cires et leurs mélanges.

Les charges peuvent être des charges antistatiques, de la silice, du graphite, du graphite expansé, du noir de carbone, des billes de verre, du kaolin, de la magnésie, des scories, de la wollastonite, des nanocharges (nanotubes de carbone).

Il est bien évident que, dans la présente invention, les billes de verre ne sont pas considérées comme des fibres de verre à section circulaire et donc ne sont pas des fibres de verre à section circulaire.

Les stabilisants peuvent être des stabilisants organiques ou minéraux.

Les plastifiants sont par exemple un ester d'octyl d'acide para-oxybenzoïque ou du N-butylbenzenesulfonamide.

Les antioxydants sont des agents contre la thermo-oxydation et/ou la photo-oxydation du polymère de la matrice thermoplastique.

Des agents nucléants tels qu'un oxyde métallique, des particules métalliques, de la silice, de l'alumine, de l'argile ou du talc sont connus.

Le lubrifiant peut être à base de stéarate ou de liant de cire.

Les ignifugeants peuvent être un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique.

Les cires peuvent en particulier être une cire amorphe, telle qu'une cire d'abeilles, une cire de silicone, une cire de polyéthylène, une cire de polyéthylène oxydé, une cire de copolymère d'éthylène, une cire de montane et une cire de polyéther.

Selon un autre aspect, la présente invention concerne une composition pour une mise en oeuvre, en particulier par injection, comprenant :
- de 25 à 65 % en poids, en particulier de 35 à 65% d'au moins un copolyamide A/X₁Y tel que défini ci-dessus,
- de 35 à 75% en poids, en particulier de 35 à 65% en poids de fibres de verre à section circulaire,
- de 0 à 10% en poids d'au moins un modifiant choc,
- de 0 à 2% en poids d'au moins un additif,
la somme des proportions de chaque constituant de la composition étant égale à 100%. Toutes les caractéristiques définies pour A, X, Y X₁, les fibres de verre, le modifiant choc et l'additif dans le cadre de l'utilisation sont valables pour la composition en tant que telle.

Avantageusement, l'acide cyclohexane dicarboxylique est exclu de la définition de l'acide dicarboxylique aliphatique (Y) présent dans cette composition. Avantageusement, ladite composition pour une mise en oeuvre, en particulier par injection, comprend :
- de 25 à 64,9% en poids, en particulier de 35 à 64,9% d'au moins un copolyamide A/X₁Y tel que défini ci-dessus,
- de 35 à 74,9% en poids, en particulier de 35 à 64,9% en poids de fibres de verre à section circulaire,
- de 0,1 à 10% en poids d'au moins un modifiant choc,
- de 0 à 2% en poids d'au moins un additif.

Avantageusement, ladite composition pour une mise en oeuvre, en particulier par injection, comprend :
- de 25 à 64,9% en poids, en particulier de 35 à 64,9% d'au moins un copolyamide A/X₁Y tel que défini ci-dessus,
- de 35 à 74,9% en poids, en particulier de 35 à 64,9% en poids de fibres de verre à section circulaire,
- de 0 à 10% en poids d'au moins un modifiant choc,
- de 0,1 à 2% en poids d'au moins un additif.

Avantageusement, ladite composition pour une mise en oeuvre, en particulier par injection, comprend :
- de 25 à 64,8% en poids, en particulier de 35 à 64,8% d'au moins un copolyamide A/X₁Y tel que défini ci-dessus,
- de 35 à 74,8% en poids, en particulier de 35 à 64,8% en poids de fibres de verre à section circulaire,
- de 0,1 à 10% en poids d'au moins un modifiant choc,
- de 0,1 à 2% en poids d'au moins un additif.

Avantageusement, le motif A de la composition pour une mise en oeuvre, en particulier par injection est un motif répétitif XY.

Avantageusement, le motif A de la composition pour une mise en oeuvre, en particulier par injection est un motif répétitif XY, et (Y) est un acide dicarboxylique aliphatique (Y) en C₆ à C₁₂, en particulier correspond à l'acide sébacique.

Notamment, le motif (X) de la composition pour une mise en oeuvre, en particulier par injection correspond à une diamine en C₆ à C₁₂, en particulier l'hexaméthylène diamine ou la decanediamine.

Dans un mode de réalisation, le motif (X₁) de la composition pour une mise en oeuvre, en particulier par injection est choisi parmi la bis(aminométhyl)cyclohexane (BAC), le 3,3'-diméthyl-4,4'-diamino-dicyclohexyl-méthane couramment dénommé (BMACM) ou (MACM) et le bis-(p-aminocyclohexyl)-méthane couramment dénommé (PACM).

La BAC peut être la 1,3-BAC ou la 1,4-BAC.

Avantageusement, le motif (X₁) de la composition pour une mise en oeuvre, en particulier par injection est choisi parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif XY, (Y) étant un acide dicarboxylique aliphatique (Y) en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif XY, (Y) correspondant à l'acide sébacique et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Dans un mode de réalisation, (X) correspond à une diamine en C₆ à C₁₂, en particulier l'hexaméthylène diamine ou la decanediamine.

Avantageusement, le motif A de la composition pour une mise en oeuvre, en particulier par injection est un motif répétitif XY, (Y) étant un acide dicarboxylique aliphatique (Y) en C₆ à C₁₂ et (X) correspond à une diamine en C₆ à C₁₂.

Avantageusement, le motif A de la composition pour une mise en oeuvre, en particulier par injection est un motif répétitif XY, (Y) étant un acide dicarboxylique aliphatique (Y) en C₆ à C₁₂ et (X) correspond à l'hexaméthylène diamine ou la decanediamine. Avantageusement, le motif A de la composition pour une mise en oeuvre, en particulier par injection est un motif répétitif XY, (Y) étant un acide dicarboxylique aliphatique (Y) en C₆ à C₁₂, (X) correspond à une diamine en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD). Avantageusement, le motif A de la composition pour une mise en oeuvre, en particulier par injection est un motif répétitif XY, (Y) étant l'acide sébacique, (X) correspond à une diamine en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif XY, (Y) étant un acide dicarboxylique aliphatique (Y) en C₆ à C₁₂, (X) correspond à l'hexaméthylène diamine ou la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif XY, (Y) étant l'acide sébacique, (X) correspond à l'hexaméthylène diamine ou la decanediamine et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif obtenu à partir de la polycondensation d'un lactame ou d'un aminoacide.

Avantageusement, le motif A de la composition pour une mise en oeuvre, en particulier par injection est un motif répétitif obtenu à partir de la polycondensation d'un lactame en C₆ à C₁₂, en particulier le caprolactame ou le lauryl lactame.

Avantageusement, le motif A de la composition pour une mise en oeuvre, en particulier par injection est un motif répétitif obtenu à partir de la polycondensation d'un lactame en C₆ à C₁₂, en particulier le caprolactame ou le lauryl lactame et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif obtenu à partir de la polycondensation du lauryl lactame et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif obtenu à partir de la polycondensation du caprolactame et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, A est un aminoacide en C₆ à C₁₂, en particulier l'acide 11-aminoundécanoïque -.

Avantageusement, le motif A de la composition pour une mise en oeuvre, en particulier par injection est un motif répétitif obtenu à partir de la polycondensation d'un aminoacide en C₆ à C₁₂ et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

Avantageusement, le motif A de la composition pour une mise en oeuvre, en particulier par injection est un motif répétitif obtenu à partir de la polycondensation de l'acide 11-aminoundécanoïque et ladite diamine (X₁) est choisie parmi la meta-xylylène diamine (MXD), la para-xylylène diamine (PXD), la bis(aminométhyl)cyclohexane (BAC) et la méthylpentaméthylène diamine (MPMD).

En particulier, ledit au moins un additif de la composition pour une mise en oeuvre, en particulier par injection est choisi parmi les charges, les colorants, les stabilisants, les plastifiants, les agents tensioactifs, les agents nucléants, les pigments, les azurants, les antioxydants, les lubrifiants, les ignifugeants, les cires et leurs mélanges.

Selon un autre aspect, la présente invention concerne l'utilisation d'une composition telle que ci-dessus définie pour constituer une structure monocouche ou au moins une couche d'une structure multicouche.

Toutes les caractéristiques définies ci-dessus sont valables pour cette utilisation. Avantageusement, ladite structure se présente sous la forme d'une pièce injectée.

La pièce injectée peut être une pièce de téléphone, en particulier une coque de téléphone ou une pièce d'ordinateur ou de tablette ou de montre connectée.

Selon un autre aspect, la présente invention concerne un objet obtenu à partir d'une composition telle que ci-dessus définie.

Selon un autre aspect, la présente invention concerne un procédé de mise en forme d'un objet tel que défini ci-dessus, caractérisé en ce qu'il comprend une étape d'injection d'une composition telle que ci-dessus définie.

Selon encore un autre aspect, la présente invention concerne l'utilisation d'un objet tel que défini ci-dessus, dans le domaine électrique et/ou de l'électronique.

### DESCRIPTION DES FIGURES

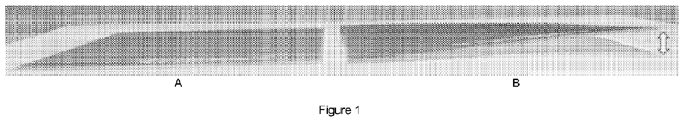

La figure 1 (A et B) présente le gauchissement obtenu avec 2 plaques (100*100*1 mm³) injectées par :
A : composition de l'invention (même type de plaque pour I1 à I8)
B : composition C1,
et mesuré tel que décrit dans l'exemple 1.
A : plaque injectée avec l'une des compositions I1 à I8 (même type de plaque pour ces différentes compositions) dont le gauchissement est limité et inférieur à 1 mm,
B : plaque injectée C1 dont le gauchissement est très important et supérieure à 5 mm.

### EXEMPLES

### Exemple 1 : Evaluation du gauchissement après 7 jours de compositions de (co)polyamides à base de CoPA 610/1,3-BAC10, 610/1,4-BAC10, 610/MXD10, 610/PXD10, 610/MPMD10, 610/B10, et de fibres de verre à section circulaire.

### Synthèse

Les différents polyamides (comparatifs) et copolyamides ont été préparés selon la technique habituelle de synthèse de polyamides et copolyamides.

Synthèse de CoPa 610/MXD10 représentative des différents copolyamides : les monomères hexamethylènediamine, m-xylylènediamine et acide sebacique sont chargés ensemble dans le réacteur selon le ratio massique souhaité. Le milieu est d'abord inerté afin d'enlever l'oxygène pouvant générer du jaunissement ou des réactions secondaires. De l'eau peut aussi être chargée pour améliorer l'échange thermique. Deux paliers de montée en température et pression sont réalisés. Les conditions de température (T°) et pression sont choisies afin de permettre que le milieu soit à l'état fondu. Après avoir atteint les conditions de maintien, le dégazage a lieu pour permettre la réaction de polycondensation. Le milieu devient peu à peu visqueux et l'eau de réaction formée est entraînée par le balayage d'azote ou mise sous vide. Lorsque les conditions d'arrêt sont atteintes, en lien avec la viscosité souhaitée, l'agitation est arrêtée et l'extrusion et la granulation peuvent démarrer. Les granulés obtenus seront ensuite compoundés avec les fibres de verre.

### Compoundage

Les compositions ont été préparées par mélange à l'état fondu des granulés de polymères. Ce mélange a été effectué par compoundage sur extrudeuse bi-vis co-rotative type MC26 avec un profil de température (T°) plat à 270°C. La vitesse de vis est de 250rpm.

L'introduction des fibres de verre à section circulaire (Nittobo CSX3J451S0) est effectuée en gavage latéral.

### Injection

Des plaques de 100*100*1 mm³ ont été préparées par injection des différentes compositions :
- Température d'injection (alimentation/buse) : 250/270°C
- Température du moule : 50°C

Le temps de cycle est ajusté en fonction des compositions pour permettre l'injection des compositions. Dans le cas de l'injection, il doit être inférieur à 50 secondes pour être selon l'invention.

Le gauchissement a été évalué selon la méthode décrite ci-dessous :
Les plaques injectées sont posées sur une table. L'opérateur appuie sur 3 angles de la plaque pour faire remonter le quatrième. On mesure alors l'écart entre la surface de la table et l'échantillon, voir la flèche de la figure 1.

Cette mesure est effectuée 7 jours après l'injection. Sur l'échantillon de gauche sur la figure 1 (A), le gauchissement est limité, c'est-à-dire inférieur à 1mm.

### Viscosité inhérente :

La mesure de la viscosité inhérente (I.V.) est réalisée dans le m-crésol. La méthode est bien connue de l'homme du métier. On suit la norme ISO 307:2007 mais en changeant le solvant (utilisation du m-crésol à la place de l'acide sulfurique ; la température (20°C), et la concentration (0,5 %massique). Elle est exprimée en dl/g.

Les résultats sont présentés sur le tableau I suivant :

**Tableau I**

| Comp. | CoPA ou polyamide (% en poids) | Fibres de verre à section circulaire (% en poids) | Gauchissement après 7 jours | Temps de cycle |
|---|---|---|---|---|
| C1 | 610 | 50% | >5 mm | <50 s |
| | I.V. : 0,90 | | | |
| C2 | 610/MXD10 (50/50) | 50% | < 1 mm | >50 s |
| | I.V. : 0,8 | | | |
| C3 | MXD10 | 50% | < 1 mm | >50 s |
| | I.V. : 0,85 | | | |
| I1 | 610/MPMD10 (80/20) | 50% | <1 mm | <50 s |
| | I.V. : 0,91 | | | |
| I2 | 610/MXD10 (80/20) | 50% | <1 mm | <50 s |
| | I.V. : 0,98 | | | |
| I3 | 610/PXD10 (70/30) | 50% | <1 mm | <50 s |
| | I.V. : 0,95 | | | |
| I4 | 610/1,3-BAC10 (80/20) | 50% | <1mm | <50 s |
| | I.V. : 0,98 | | | |
| I5 | 610/1,4-BAC10 (80/20) | 50% | <1mm | <50 s |
| | I.V. : 0,87 | | | |
| I9 | 610/B10 (80/20) | 50% | <1mm | <50 s |
| | I.V. : 0,8 | | | |
| I10 | 610/B10 (70/30) | 50% | <1mm | <50 s |
| | I.V. : 0,8 | | | |

| | | | | |
|---|---|---|---|---|
| Comp. signifie composition. Cx signifie composition comparative. Ix signifie composition de l'invention. | | | | |

### Exemple 2 : Evaluation du gauchissement de compositions de PA11 de viscosité intrinsèque I.V. = 1,08 ou de compositions de copolyamides à base de PA 11 (CoPA 11/MXD10 (50/50, I.V.= 0,93), 11/MXD10 (80/20 I.V.=0,96), 11/1,3-BAC10 (80/20, I.V.= 1,10) et 11/PXD10 (80/20, I.V.= 1,15)

La synthèse, le compoundage et l'injection sont effectués comme décrit pour l'exemple 1 à la différence que la température du moule est de 45°C et la température d'injection est de 260°C.

Les résultats sont présentés dans le tableau II suivant :

**Tableau II**

| Comp. | CoPA ou polyamide (% en poids) | Fibres de verre à section circulaire (% en poids) | Gauchissement après 7 jours | Temps de cycle |
|---|---|---|---|---|
| C4 | 11 | 50% | 3 mm | <50 s |
| | I.V. : 1,08 | | | |
| C5 | 11/MXD10 (50/50) | 50% | < 1 mm | > 50s |
| | (IV : 0.93) | | | |
| I6 | 11/MXD10 (80/20) | 50% | < 1 mm | <50 s |
| | I.V. : 0,96 | | | |
| I7 | 11/1,3-BAC10 (80/20) | 50% | <1 mm | <50 s |
| | I.V. : 1,10 | | | |
| I8 | 11/PXD10 (80/20) | 50% | <1 mm | <50 s |
| | I.V. : 1,15 | | | |

## Revendications

1. Utilisation d'une composition comprenant au moins un copolyamide A/X₁Y semi-cristallin dans lequel :
- A est un motif répétitif obtenu à partir de la polycondensation d'au moins un lactame en C₆ à C₁₂, de préférence en C₁₂, ou d'au moins un aminoacide en C₆ à C₁₂, de préférence en C₁₁, ou d'au moins un motif répétitif XY obtenu à partir de la polycondensation d'au moins une diamine aliphatique (X) en C₄ à C₁₈, en particulier en C₄ à C₁₂ et d'au moins un acide dicarboxylique aliphatique (Y) en C₆ à C₁₈, en particulier en C₆ à C₁₂,
- X₁Y est un motif répétitif obtenu à partir de la polycondensation d'une diamine (X₁) choisie parmi une arylamine, une diamine cycloaliphatique et une diamine aliphatique ramifiée, et d'au moins un acide dicarboxylique aliphatique (Y) identique à celui du motif XY,
le ratio en poids A/X₁Y étant compris de 60/40 à 95/5,
des fibres de verre à section circulaire, et
optionnellement au moins un modifiant choc et/ou au moins un additif,
pour limiter le gauchissement d'un article issu de ladite composition tout en gardant le temps de cycle de la composition obtenue adapté à sa mise en oeuvre pour la préparation dudit article, en particulier par injection, par rapport à un article issu d'un polyamide aliphatique linéaire A seul.

2. Utilisation d'une composition comprenant au moins un copolyamide A/X₁Y semi-cristallin dans lequel :
- A est un motif répétitif obtenu à partir de la polycondensation d'un lactame en C₆ à C₁₂, de préférence en C₁₂, ou d'un aminoacide en C₆ à C₁₂, de préférence en C₁₁, ou d'un motif répétitif XY obtenu à partir de la polycondensation d'une diamine aliphatique (X) en C₄ à C₁₈, en particulier en C₄ à C₁₂ et d'un acide dicarboxylique aliphatique (Y) en C₆ à C₁₈, en particulier en C₆ à C₁₂,
- X₁Y est un motif répétitif obtenu à partir de la polycondensation d'une diamine (X₁) choisie parmi une arylamine, une diamine cycloaliphatique et une diamine aliphatique ramifiée, et d'un acide dicarboxylique aliphatique (Y) identique à celui du motif XY,
le ratio en poids A/X₁Y étant compris de 60/40 à 95/5,
des fibres de verre à section circulaire, et
optionnellement au moins un modifiant choc et/ou au moins un additif,
pour limiter le gauchissement d'un article issu de ladite composition tout en gardant le temps de cycle de la composition obtenue adapté à sa mise en oeuvre pour la préparation dudit article, en particulier par injection, par rapport à un article issu d'un polyamide aliphatique linéaire A seul.

3. Utilisation selon la revendication 1 ou 2, **caractérisée en ce que** ladite composition comprend :
- de 25 à 65% en poids, en particulier de 35 à 65% dudit au moins un copolyamide A/X₁Y,
- de 35 à 75% en poids, en particulier de 35 à 65% en poids de fibres de verre à section circulaire,
- de 0 à 10% en poids d'au moins un modifiant choc,
- de 0 à 2% en poids d'au moins un additif,
la somme des proportions de chaque constituant de la composition étant égale à 100%.

4. Utilisation selon l'une des revendications 1 à 3, **caractérisée en ce que** ladite arylamine est choisie parmi la meta-xylylène diamine (MXD) et la para-xylylène diamine (PXD).

5. Utilisation selon l'une des revendications 1 à 3, **caractérisée en ce que** ladite diamine cycloaliphatique est choisie parmi la bis(aminométhyl)cyclohexane (BAC), le 3,3'-diméthyl-4,4'-diamino-dicyclohexyl-méthane couramment dénommé (BMACM) ou (MACM) et le p-bis(aminocyclohexyl)-méthane couramment dénommé (PACM).

6. Utilisation selon la revendication 5, **caractérisée en ce que** ladite diamine cycloaliphatique est la bis(aminométhyl)cyclohexane (BAC).

7. Utilisation selon l'une des revendications 1 à 3, **caractérisée en ce que** ladite diamine aliphatique ramifiée est choisie parmi la 2-méthyloctanediamine (MOMD), la méthylpentaméthylène diamine (MPMD) et la triméthylhexaneméthylènediamine (TMDA).

8. Utilisation selon l'une des revendications 1 à 7, **caractérisée en ce que** (X₁) est choisie parmi la meta-xylylène diamine (MXD), la para-xylylène diamine (PXD), la bis(aminométhyl)cyclohexane (BAC) et la méthylpentaméthylène diamine (MPMD).

9. Utilisation selon l'une des revendications 1 à 8, **caractérisée en ce que** A est un motif répétitif XY.

10. Utilisation selon la revendication 9, **caractérisée en ce que** A est un motif répétitif XY, et (Y) est un acide dicarboxylique aliphatique (Y) en C₆ à C₁₂, en particulier (Y) correspond à l'acide sébacique.

11. Utilisation selon l'une des revendications 9 ou 10, **caractérisée en ce que** (X) correspond à une diamine en C₆ à C₁₂, en particulier l'hexaméthylène diamine ou la decanediamine.

12. Utilisation selon l'une des revendications 1 à 8, **caractérisée en ce que** A est un motif répétitif obtenu à partir de la polycondensation d'un lactame ou d'un aminoacide.

13. Utilisation selon la revendication 12, **caractérisée en ce que** A est lactame en C₆ à C₁₂, en particulier le lauryl lactame.

14. Utilisation selon la revendication 12, **caractérisée en ce que** A est un aminoacide en C₆ à C₁₂, en particulier l'acide 11-aminoundécanoïque.

15. Utilisation selon l'une des revendications 1 à 14, **caractérisée en ce que** ledit au moins un additif est choisi parmi les charges, les colorants, les stabilisants, les plastifiants, les agents tensioactifs, les agents nucléants, les pigments, les azurants, les antioxydants, les lubrifiants, les ignifugeants, les cires et leurs mélanges.

16. Composition pour une mise en oeuvre, en particulier par injection, comprenant :
- de 25 à 65% en poids, en particulier de 35 à 65% d'au moins un copolyamide A/X₁Y tel que défini dans l'une des revendications 1 à 15,
l'acide cyclohexane dicarboxylique étant exclu de la définition de l'acide dicarboxylique aliphatique (Y),
- de 35 à 75% en poids, en particulier de 35 à 65% en poids de fibres de verre à section circulaire,
- de 0 à 10% en poids d'au moins un modifiant choc,
- de 0 à 2% en poids d'au moins un additif,
la somme des proportions de chaque constituant de la composition étant égale à 100%.

17. Composition selon la revendication 16, **caractérisée en ce que** A est un motif répétitif XY.

18. Composition selon la revendication 17, **caractérisée en ce que** A est un motif répétitif XY, et (Y) est un acide dicarboxylique aliphatique (Y) en C₆ à C₁₂, en particulier correspond à l'acide sébacique.

19. Composition selon l'une des revendications 17 ou 18, **caractérisée en ce que** (X) correspond à une diamine en C₆ à C₁₂, en particulier l'hexaméthylène diamine ou la decanediamine.

20. Composition selon l'une des revendications 16 à 19, **caractérisée en ce que** (X₁) est choisi parmi la meta-xylylène diamine (MXD), la para-xylylène diamine (PXD), la bis(aminométhyl)cyclohexane (BAC) et la méthylpentaméthylène diamine (MPMD).

21. Composition selon l'une des revendications 16 à 20, **caractérisée en ce que** ledit au moins un additif est choisi parmi les charges, les colorants, les stabilisants, les plastifiants, les agents tensioactifs, les agents nucléants, les pigments, les azurants, les antioxydants, les lubrifiants, les ignifugeants, les cires et leurs mélanges.

22. Utilisation d'une composition selon l'une des revendications 16 à 21 pour constituer une structure monocouche ou au moins une couche d'une structure multicouche.

23. Utilisation selon la revendication 22, **caractérisée en ce que** la structure se présente sous la forme d'une pièce injectée.

24. Objet obtenu à partir d'une composition telle que définie dans l'une des revendications 16 à 21.

25. Procédé de mise en forme d'un objet selon la revendication 24, **caractérisé en ce qu'**il comprend une étape d'injection d'une composition telle que définie dans l'une des revendications 16 à 21.

26. Utilisation d'un objet selon la revendication 24, dans le domaine électrique et/ou de l'électronique.

## Patentansprüche

1. Verwendung einer Zusammensetzung, umfassend mindestens ein halbkristallines A/X₁Y-Copolyamid, in dem:
- A eine Wiederholungseinheit ist, die erhalten wird durch Polykondensation mindestens eines C₆- bis C₁₂-, bevorzugt C₁₂-Lactams oder mindestens einer C₆- bis C₁₂-, bevorzugt C₁₁-Aminosäure oder mindestens einer Wiederholungseinheit XY, die erhalten wird durch Polykondensation mindestens eines aliphatischen C₄- bis C₁₈-, insbesondere C₄- bis C₁₂-Diamins (X) und mindestens einer aliphatischen C₆- bis C_{1S}-, insbesondere C₆- bis C₁₂-Dicarbonsäure (Y),
- X₁Y eine Wiederholungseinheit ist, die erhalten wird durch Polykondensation eines Diamins (X₁), das unter einem Arylamin, einem cycloaliphatischen Diamin und einem verzweigten aliphatischen Diamin gewählt ist, und mindestens einer aliphatischen Dicarbonsäure (Y), die identisch mit derjenigen der Einheit XY ist,
wobei das Gewichtsverhältnis A/X₁Y 60/40 bis 95/5 beträgt,
Glasfasern mit kreisförmigem Querschnitt, und
optional mindestens einen Schlagzäh-Modifikator und/oder mindestens einen Zusatzstoff,
um das Verziehen eines aus der Zusammensetzung hervorgegangenen Artikels unter Beibehaltung der Zykluszeit der erhaltenen Zusammensetzung, die zu seiner Verarbeitung zur Herstellung des Artikels, insbesondere durch Spritzgießen, geeignet ist, gegenüber einem Artikel, der aus einem geradkettigen aliphatischen Polyamid A allein hervorgegangen ist, zu begrenzen.

2. Verwendung einer Zusammensetzung, umfassend mindestens ein halbkristallines A/X₁Y-Copolyamid, in dem:
- A eine Wiederholungseinheit ist, die erhalten wird durch Polykondensation eines C₆- bis C₁₂-, bevorzugt C₁₂-Lactams oder einer C₆- bis C₁₂-, bevorzugt C₁₁-Aminosäure oder einer Wiederholungseinheit XY, die erhalten wird durch Polykondensation eines aliphatischen C₄- bis C₁₈-, insbesondere C₄- bis C₁₂-Diamins (X) und einer aliphatischen C₆- bis C_{1S}-, insbesondere C₆- bis C₁₂-Dicarbonsäure (Y),
- X₁Y eine Wiederholungseinheit ist, die erhalten wird durch Polykondensation eines Diamins (X₁), das unter einem Arylamin, einem cycloaliphatischen Diamin und einem verzweigten aliphatischen Diamin gewählt ist, und einer aliphatischen Dicarbonsäure (Y), die identisch mit derjenigen der Einheit XY ist,
wobei das Gewichtsverhältnis A/X₁Y 60/40 bis 95/5 beträgt,
Glasfasern mit kreisförmigem Querschnitt, und
optional mindestens einen Schlagzäh-Modifikator und/oder mindestens einen Zusatzstoff,
um das Verziehen eines aus der Zusammensetzung hervorgegangenen Artikels unter Beibehaltung der Zykluszeit der erhaltenen Zusammensetzung, die zu seiner Verarbeitung zur Herstellung des Artikels, insbesondere durch Spritzgießen, geeignet ist, gegenüber einem Artikel, der aus einem geradkettigen aliphatischen Polyamid A allein hervorgegangen ist, zu begrenzen.

3. Verwendung nach Anspruch 1 oder 2, **dadurch gekennzeichnet, dass** die Zusammensetzung umfasst:
- 25 bis 65 Gew.-%, insbesondere 35 bis 65 Gew.-% des mindestens einen Copolyamids A/X₁Y,
- 35 bis 75 Gew.-%, insbesondere 35 bis 65 Gew.-% Glasfasern mit kreisförmigem Querschnitt,
- 0 bis 10 Gew.-% mindestens eines Schlagzäh-Modifikators,
- 0 bis 2 Gew.-% mindestens eines Zusatzstoffs, wobei die Summe der Anteile jedes Bestandteils der Zusammensetzung 100 % beträgt.

4. Verwendung nach einem der Ansprüche 1 bis 3, **dadurch gekennzeichnet, dass** das Arylamin unter dem Meta-Xylylendiamin (MXD) und dem Para-Xylylendiamin (PXD) gewählt ist.

5. Verwendung nach einem der Ansprüche 1 bis 3, **dadurch gekennzeichnet, dass** das cycloaliphatische Diamin unter dem Bis(aminomethyl)cyclohexan (BAC), dem 3,3'-Dimethyl-4,4'-diamino-dicyclohexyl-methan, üblicherweise als (BMACM) oder (MACM) bezeichnet, und dem p-Bis(aminocyclohexyl)-methan, üblicherweise als (PACM) bezeichnet, gewählt ist.

6. Verwendung nach Anspruch 5, **dadurch gekennzeichnet, dass** das cycloaliphatische Diamin das Bis(aminomethyl)cyclohexan (BAC) ist.

7. Verwendung nach einem der Ansprüche 1 bis 3, **dadurch gekennzeichnet, dass** das verzweigte aliphatische Diamin unter dem 2-Methyloctandiamin (MOMD), dem Methylpentamethylendiamin (MPMD) und dem Trimethylhexanmethylendiamin (TMDA) gewählt ist.

8. Verwendung nach einem der Ansprüche 1 bis 7, **dadurch gekennzeichnet, dass** (X₁) unter dem Meta-Xylylendiamin (MXD), dem Para-Xylylendiamin (PXD), dem Bis(aminomethyl)cyclohexan (BAC) und dem Methylpentamethylendiamin (MPMD) gewählt ist.

9. Verwendung nach einem der Ansprüche 1 bis 8, **dadurch gekennzeichnet, dass** A eine Wiederholungseinheit XY ist.

10. Verwendung nach Anspruch 9, **dadurch gekennzeichnet, dass** A eine Wiederholungeinheit XY ist und (Y) eine aliphatische C₆- bis C₁₂-Dicarbonsäure (Y) ist, (Y) insbesondere der Sebacinsäure entspricht.

11. Verwendung nach einem der Ansprüche 9 oder 10, **dadurch gekennzeichnet, dass** (X) einem C₆- bis C₁₂-Diamin, insbesondere dem Hexamehylendiamin oder dem Decandiamin entspricht.

12. Verwendung nach einem der Ansprüche 1 bis 8, **dadurch gekennzeichnet, dass** A eine Wiederholungseinheit ist, die durch Polykondensation eines Lactams oder einer Aminosäure erhalten wird.

13. Verwendung nach Anspruch 12, **dadurch gekennzeichnet, dass** A C₆- bis C₁₂-Lactam, insbesondere das Laurinlactam ist.

14. Verwendung nach Anspruch 12, **dadurch gekennzeichnet, dass** A eine C₆- bis C₁₂-Aminosäure, insbesondere die 11-Aminoundecansäure ist.

15. Verwendung nach einem der Ansprüche 1 bis 14, **dadurch gekennzeichnet, dass** der mindestens eine Zusatzstoff unter den Füllstoffen, den Farbstoffen, den Stabilisatoren, den Weichmachern, den grenzflächenaktiven Stoffen, den Nukleierungsmitteln, den Pigmenten, den Aufhellern, den Antioxidantien, den Schmiermitteln, den Flammschutzmitteln, den Wachsen und ihren Mischungen gewählt ist.

16. Zusammensetzung für eine Verarbeitung, insbesondere durch Spritzgießen, umfassend:
- 25 bis 65 Gew.-%, insbesondere 35 bis 65 Gew.-% mindestens eines Copolyamids A/X₁Y wie in einem der Ansprüche 1 bis 15 definiert,
wobei die Cyclohexandicarbonsäure von der Definition der aliphatischen Dicarbonsäure (Y) ausgenommen ist,
- 35 bis 75 Gew.-%, insbesondere 35 bis 65 Gew.-% Glasfasern mit kreisförmigem Querschnitt,
- 0 bis 10 Gew.-% mindestens eines Schlagzäh-Modifikators,
- 0 bis 2 Gew.-% mindestens eines Zusatzstoffs, wobei die Summe der Anteile jedes Bestandteils der Zusammensetzung 100 % beträgt.

17. Zusammensetzung nach Anspruch 16, **dadurch gekennzeichnet, dass** A eine Wiederholungseinheit XY ist.

18. Zusammensetzung nach Anspruch 17, **dadurch gekennzeichnet, dass** A eine Wiederholungeinheit XY ist und (Y) eine aliphatische C₆- bis C₁₂-Dicarbonsäure (Y) ist, insbesondere der Sebacinsäure entspricht.

19. Zusammensetzung nach einem der Ansprüche 17 oder 18, **dadurch gekennzeichnet, dass** (X) einem C₆- bis C₁₂-Diamin, insbesondere dem Hexamehylendiamin oder dem Decandiamin entspricht.

20. Zusammensetzung nach einem der Ansprüche 16 bis 19, **dadurch gekennzeichnet, dass** (X₁) unter dem Meta-Xylylendiamin (MXD), dem Para-Xylylendiamin (PXD), dem Bis(aminomethyl)cyclohexan (BAC) und dem Methylpentamethylendiamin (MPMD) gewählt ist.

21. Zusammensetzung nach einem der Ansprüche 16 bis 20, **dadurch gekennzeichnet, dass** der mindestens eine Zusatzstoff unter den Füllstoffen, den Farbstoffen, den Stabilisatoren, den Weichmachern, den grenzflächenaktiven Stoffen, den Nukleierungsmitteln, den Pigmenten, den Aufhellern, den Antioxidantien, den Schmiermitteln, den Flammschutzmitteln, den Wachsen und ihren Mischungen gewählt ist.

22. Verwendung einer Zusammensetzung nach einem der Ansprüche 16 bis 21 zum Bilden einer einschichtigen Struktur oder mindestens einer Schicht einer einschichtigen Struktur.

23. Verwendung nach Anspruch 22, **dadurch gekennzeichnet, dass** die Struktur in Form eines spritzgegossenen Teils vorliegt.

24. Gegenstand, der aus einer Zusammensetzung wie in einem der Ansprüche 16 bis 21 definiert erhalten wird.

25. Verfahren zum Formen eines Gegenstands nach Anspruch 24, **dadurch gekennzeichnet, dass** es einen Schritt des Spritzgießens einer Zusammensetzung wie in einem der Ansprüche 16 bis 21 definiert umfasst.

26. Verwendung eines Gegenstands nach Anspruch 24 im Elektro- und/oder Elektronikbereich.

## Claims

1. Use of a composition comprising at least one semicrystalline copolyamide A/X₁Y in which:
- A is a repeating unit obtained from the polycondensation of at least one C₆ to C₁₂, preferably C₁₂ lactam, or of at least one C₆ to C₁₂, preferably C₁₁ amino acid, or of at least one repeating unit XY obtained from the polycondensation of at least one aliphatic C₄ to C₁₈, in particular C₄ to C₁₂ diamine (X) and of at least one aliphatic C₆ to C₁₈, in particular C₆ to C₁₂ dicarboxylic acid (Y),
- X₁Y is a repeating unit obtained from the polycondensation of a diamine (X₁) chosen from an arylamine, a cycloaliphatic diamine and a branched aliphatic diamine, and of at least one aliphatic dicarboxylic acid (Y) identical to that of the unit XY,
the A/X₁Y weight ratio being between from 60/40 to 95/5,
glass fibres with a circular cross section, and optionally at least one impact modifier and/or at least one additive,
in order to limit the warping of an article obtained from said composition while keeping the cycle time of the composition obtained appropriate for the processing thereof for the preparation of said article, in particular by injection moulding, compared to an article obtained from a linear aliphatic polyamide A alone.

2. Use of a composition comprising at least one semicrystalline copolyamide A/X₁Y in which:
- A is a repeating unit obtained from the polycondensation of a C₆ to C₁₂, preferably C₁₂ lactam, or of a C₆ to C₁₂, preferably C₁₁ amino acid, or of a repeating unit XY obtained from the polycondensation of an aliphatic C₄ to C₁₈, in particular C₄ to C₁₂ diamine (X) and of an aliphatic C₆ to C₁₈, in particular C₆ to C₁₂ dicarboxylic acid (Y),
- X₁Y is a repeating unit obtained from the polycondensation of a diamine (X₁) chosen from an arylamine, a cycloaliphatic diamine and a branched aliphatic diamine, and of an aliphatic dicarboxylic acid (Y) identical to that of the unit XY,
the A/X₁Y weight ratio being between from 60/40 to 95/5, glass fibres with a circular cross section, and
optionally at least one impact modifier and/or at least one additive,
in order to limit the warping of an article obtained from said composition while keeping the cycle time of the composition obtained appropriate for the processing thereof for the preparation of said article, in particular by injection moulding, compared to an article obtained from a linear aliphatic polyamide A alone.

3. Use according to Claim 1 or 2, **characterized in that** said composition comprises:
- from 25% to 65% by weight, in particular from 35% to 65% of said at least one copolyamide A/X₁Y,
- from 35% to 75% by weight, in particular from 35% to 65% by weight of glass fibres with a circular cross section,
- from 0 to 10% by weight of at least one impact modifier,
- from 0 to 2% by weight of at least one additive, the sum of the proportions of each constituent of the composition being equal to 100%.

4. Use according to one of Claims 1 to 3, **characterized in that** said arylamine is chosen from meta-xylylenediamine (MXD) and para-xylylenediamine (PXD).

5. Use according to one of Claims 1 to 3, **characterized in that** said cycloaliphatic diamine is chosen from bis(aminomethyl)cyclohexane (BAC), 3,3'-dimethyl-4,4'-diaminodicyclohexylmethane commonly known as (BMACM) or (MACM) and bis(p-aminocyclohexyl)methane commonly known as (PACM).

6. Use according to Claim 5, **characterized in that** said cycloaliphatic diamine is bis(aminomethyl)cyclohexane (BAC) .

7. Use according to one of Claims 1 to 3, **characterized in that** said branched aliphatic diamine is chosen from 2-methyloctanediamine (MOMD), methylpentamethylenediamine (MPMD) and trimethylhexanemethylenediamine (TMDA) .

8. Use according to one of Claims 1 to 7, **characterized in that** (X₁) is chosen from meta-xylylenediamine (MXD), para-xylylenediamine (PXD), bis(aminomethyl)cyclohexane (BAC) and methylpentamethylenediamine (MPMD).

9. Use according to one of Claims 1 to 8, **characterized in that** A is a repeating unit XY.

10. Use according to Claim 9, **characterized in that** A is a repeating unit XY, and (Y) is an aliphatic C₆ to C₁₂ dicarboxylic acid (Y), in particular (Y) corresponds to sebacic acid.

11. Use according to either of Claims 9 and 10, **characterized in that** (X) corresponds to a C₆ to C₁₂ diamine, in particular hexamethylenediamine or decanediamine.

12. Use according to one of Claims 1 to 8, **characterized in that** A is a repeating unit obtained from the polycondensation of a lactam or of an amino acid.

13. Use according to Claim 12, **characterized in that** A is C₆ to C₁₂ lactam, in particular lauryl lactam.

14. Use according to Claim 12, **characterized in that** A is a C₆ to C₁₂ amino acid, in particular 11-aminoundecanoic acid.

15. Use according to one of Claims 1 to 14, **characterized in that** said at least one additive is chosen from fillers, dyes, stabilizers, plasticizers, surfactants, nucleating agents, pigments, brighteners, antioxidants, lubricants, flame retardants, waxes and mixtures thereof.

16. Composition for processing, in particular by injection moulding, comprising:
- from 25% to 65% by weight, in particular from 35% to 65% of said at least one copolyamide A/X₁Y as defined in one of Claims 1 to 15,
cyclohexanedicarboxylic acid being excluded from the definition of the aliphatic dicarboxylic acid (Y),
- from 35% to 75% by weight, in particular from 35% to 65% by weight of glass fibres with a circular cross section,
- from 0 to 10% by weight of at least one impact modifier,
- from 0 to 2% by weight of at least one additive, the sum of the proportions of each constituent of the composition being equal to 100%.

17. Composition according to Claim 16, **characterized in that** A is a repeating unit XY.

18. Composition according to Claim 17, **characterized in that** A is a repeating unit XY, and (Y) is an aliphatic C₆ to C₁₂ dicarboxylic acid (Y), and in particular corresponds to sebacic acid.

19. Composition according to either of Claims 17 and 18, **characterized in that** (X) corresponds to a C₆ to C₁₂ diamine, in particular hexamethylenediamine or decanediamine.

20. Composition according to one of Claims 16 to 19, **characterized in that** (X₁) is chosen from meta-xylylenediamine (MXD), para-xylylenediamine (PXD), bis(aminomethyl)cyclohexane (BAC) and methylpentamethylenediamine (MPMD).

21. Composition according to one of Claims 16 to 20, **characterized in that** said at least one additive is chosen from fillers, dyes, stabilizers, plasticizers, surfactants, nucleating agents, pigments, brighteners, antioxidants, lubricants, flame retardants, waxes and mixtures thereof.

22. Use of a composition according to one of Claims 16 to 21, in order to form a single-layer structure or at least one layer of a multilayer structure.

23. Use according to Claim 22, **characterized in that** the structure is in the form of an injection-moulded part.

24. Object obtained from a composition as defined in one of Claims 16 to 21.

25. Process for forming an object according to Claim 24, **characterized in that** it comprises a step of injection moulding a composition as defined in one of Claims 16 to 21.

26. Use of an object according to Claim 24, in the electrical and/or electronic field.
